# EUROPÄISCHE PATENTSCHRIFT

(11) **EP 2 545 826 B1**
(45) Veröffentlichungstag und Bekanntmachung des Hinweises auf die Patenterteilung: **09.05.2018**
(21) Anmeldenummer: 12005019.0
(22) Anmeldetag: 06.07.2012
(51) Int. Cl.: A47J 31/46, A47J 31/36, A47J 31/44

(54) **Espressokaffeemaschine mit einer Brüheinheit**
Espresso coffee machine with a brewing unit
Machine à café expresso avec unité d'infusion

(30) Priorität: 11.07.2011 DE 202011103272 U
(43) Veröffentlichungstag der Anmeldung: 16.01.2013
(60) Teilanmeldung: 14002938.0
(73) Patentinhaber: Eugster/Frismag AG, 8580 Amriswil (CH)
(72) Erfinder: Fischer, Daniel, 8590 Romanshorn (CH); Brendle, Christian, 8586 Erlen (DE)
(74) Vertreter: Patentanwälte Behrmann Wagner PartG mbB

(56) Entgegenhaltungen:
- EP-A1- 1 308 115
- WO-A1-2007/060694
- WO-A1-2011/045710

## Beschreibung

Die Erfindung betrifft eine Espressokaffeemaschine mit einer Brüheinheit nach dem Oberbegriff des Anspruchs 1.

Eine bekannte Espressokaffeemaschine hat einen zylindrischen Brühkopf, der einen Siebeinsatz mit einem Boden aufweist, in dem eine Auslauföffnung angeordnet ist (DE 30 35 157 A1). Die Auslauföffnung bildet einen Ventilsitz für ein Rückschlagventil bzw. Druckventil mit einer Feder, die einen in die Auslauföffnung des Siebeinsatzes eingreifenden Ventilkegel trägt. Bei Kaffeegetränkebereitung mit einer solchen Espressomaschine ist das Rückschlagventil zunächst durch die Feder geschlossen, wodurch sich der Druck in dem Brühkopf infolge des einlaufenden Brühwassers so lange erhöht. bis das Rückschlagventil öffnet und das Kaffeegetränk durch den Kaffeeauslauf in Kaffeetasse strömen kann, wobei sich auf der Oberfläche des Kaffeegetränks. Espresso, der gewünschte Kaffeeschaum bildet, der Crema bezeichnet wird. Das Rückschlagventil wird daher auch Cremaventil genannt.

Derartige Cremaventile weisen sonst meist eine federbelastete Kugel oder Kugelkopfanordnung auf und sind geeignet, in einer Brühkammer einen Druck von mindestens ca. 5 bar aufzubauen.

Während eine espresso-typische Crema ein Qualitätsmerkmal eines guten Espresso ist, wird eine Crema bei anderen Kaffeegetränkearten, die neuerdings mit derselben Espressokaffeemaschine zubereitet werden können wie der Espresso, nicht immer gewünscht. Dies gilt insbesondere für eine in größeren Portionen als Espresso gebrühten einfachen Kaffee, der auch als Morgenkaffee bezeichnet wird. Eine andere bekannte Kaffeegetränkeart, der sogenannte Schümlikaffee, hat wiederum idealerweise einen für diesen charakteristischen aufschwimmenden Schaum.

Es ist bereits eine Espressokaffeemaschine bekannt, mit der von dem Benutzer wählbare Kaffeegetränkearten bereitet werden können und die hierzu eine als Regelventileinrichtung ausgebildete Ventileinrichtung zwischen der Brühkammer und einem Getränkeauslass aufweisen, wobei durch den Benutzer beeinflussbare Mittel zum Verändern der pro Zeiteinheit durch die Ventileinrichtung strömenden Menge Kaffeegetränk vorgesehen sind (EP 1 133 944 B1). Die Ventileinrichtung weist hierzu einen relativ zu einem Ventilsitz verschiebbaren, mittels einer Feder belasteten Ventilkörper auf, bei der die Feder bestrebt ist, den Ventilkörper in einer Offenstellung zu halten und bei der der Ventilkörper von dem unter Druck stehenden Kaffeegetränk entgegen der Vorspannkraft der Feder in Schließstellung verschoben wird. Als Mittel zum Verändern der pro Zeiteinheit durch die Ventileinrichtung strömenden Kaffeegetränkmenge können Mittel zum Verändern der Vorspannkraft der Feder geeignet sein und/oder es kann der strömungstechnisch relevante Auslassquerschnitt einer Ventilkammer der Ventileinrichtung veränderbar sein. Diese Mittel zum Verändern der pro Zeiteinheit durch eine Regelventileinrichtung strömenden Kaffeegetränkemenge sind jedoch präzise zu fertigen, insbesondere wenn der Auslassquerschnitt der Regelventileinrichtung verändert werden soll. Eine langzeitige, konstante Wirkung ist fraglich, zumal die Durchlaufrate des durch das Kaffeepulver strömenden Brühwassers mit der Regeleinrichtung deswegen nicht auf einem absolut konstanten Wert gehalten werden kann, weil das Regelverhalten der Ventileinrichtung u.a. von der Viskosität der durchströmenden Flüssigkeit abhängt (Spalte 3, Zeile 56 - Spalte 4, Zeile 9). Nachteilig ist auch, dass die Regelventileinrichtung zwischen der Brüheinheit und dem Getränkeauslass ein ausreichendes Einbauvolumen in der Espressokaffeemaschine beansprucht

Bei einer bekannten Espressokaffeemaschine nach dem Oberbegriff des Anspruchs 1 wird eine Brühkammer durch zwei gegeneinander bewegliche Teile gebildet, von denen eines als auf- und abschiebbarer Hohlzylinder geformt sein kann, in den ein feststehendes Teil mit einem extern verschließbaren weiten Kanal zu einer Getränkeabgabeleitung und mit einem engeren Kanal, in dem ein Drosselventil angeordnet ist und der ebenfalls zu der Getränkeabgabeleitung führt, hineinreicht (WO 2007/060694 A1). Ein Verschlusselement ist in einer Einstellung in dem extern verschließbaren Kanal abgesenkt, wodurch der Kanal geöffnet ist, der einen in der Brühkammer bereiteten Filterkaffee in ein Auffanggefäß leitet. Dabei ist das Drosselventil, das als federbelastetes Kugelventil ausgebildet ist, in dem engeren Kanal selbsttätig geschlossen. Das Verschlusselement kann durch Anlage des auf- und abschiebbaren Hohlzylinders geschlossen werden, wenn dessen Hub zur Espressozubereitung groß eingestellt wird. Bei letzterer Einstellung öffnet das Drosselventil in dem engeren Kanal, durch den in der Brühkammer bereiteter Espresso durch die Getränkeabgabeleitung stromabwärts des Verschlusselements in das Auffanggefäß geleitet wird. Der Öffnungsdruck des Drosselventils kann von dem Nutzer durch Einstellung der Federvorspannung vorgegeben werden.

Die WO 2011/45710 A1 offenbart eine Brüheinheit zum Kaffeebrühen mit einem überdrucklosen Kaffeegetränkebypasskanal strömungsmäßig parallel zu einem ersten Druckventil (Cremaventil). Der Kaffeegetränkebypasskanal kann zwischen der Brühkammer und dem Kaffeegetränkeauslauf gesperrt werden, um nach einem Brühvorgang einen Kaffeerückstand in der Brühkammer zu vermeiden. Hierzu soll der Kaffeegetränkebypasskanal durch Koppelung mit einem Deckel der Brüheinheit nach Abschluss eines Brühvorgangs aktiviert werden.

Demgemäß liegt der vorliegenden Erfindung die Aufgabe zugrunde, eine Espressokaffeemaschine der eingangs genannten Gattung zu schaffen, bei der mit unkomplizierten, einfach zu fertigenden Mitteln, die auch langzeitig zuverlässig funktionieren, eine von mehreren, wenigstens zwei Kaffeegetränkearten ausgewählte Kaffeegetränkeart mit hierauf abgestimmtem Schaum hergestellt werden kann, wobei als Kaffeegetränkearten zunächst von Espresso und einfachem Kaffee bzw. Morgenkaffee ausgegangen wird.

Die erfindungsgemäße Lösung, die auf einer Espressokaffeemaschine mit einem herkömmlichen federbelasteten Druckventil bzw. Cremaventil, welches öffnet, wenn der Brühkammerdruck einen ersten konstruktiv vorgegebenen Wert überschreitet, ausgeht, sieht im Prinzip einen praktisch überdrucklosen Kaffeegetränkebypasskanal vor, der strömungsmäßig parallel zu mindestens dem ersten Druckventil angeordnet ist und der zwischen der Brühkammer und einem Kaffeegetränkeauslauf abgesperrt werden kann. Eine solche Sperrung kann an dem kaffeegetränkeauslaufseitigen Ende des Kaffeegetränkebypasskanals in einer Espressokaffeemaschine nach den Ansprüchen 1 und 2 bzw. in der entsprechenden Brüheinheit nach Anspruch 9 erfolgen.

Unter dem überdrucklosen Kaffeegetränkebypasskanal wird ein Kaffeegetränkebypasskanal verstanden, dessen Innendruck im Wesentlichen gleich dem Druck der den Kaffeegetränkebypasskanal an dessen auslaufseitigen Ende umgebenden Atmosphäre ist.

In besonders kompakter Weise geht die Espressomaschine gemäß Anspruch 1 zur wahlweise Bereitung eines Espresso mit Crema oder eines Morgenkaffees ohne aufschwimmenden Schaum von einer in einer Brüheinheit an sich bekannten Brühkammer aus, in der ein Brühkolben entgegen Federkraft verschiebbar angeordnet ist. In diesem Fall ist nicht nur das erste Druckventil bzw. Cremaventil in dem Brühkolben angeordnet, sondern es sind in ihm auch der Getränkebypasskanal und ein Ventilkolben eines Kolbenventils angeordnet, der außerhalb der Brühkammer eingestellt werden kann. Das Kolbenventil mit dem ersten Ventilkolben, welches einerseits mit dem Kaffeegetränkebypasskanal sowie andererseits mit dem Kaffeegetränkeauslauf bzw. Kaffeegetränkeauslaufkanal strömungstechnisch so verbunden ist, dass er in einer ersten Ventilstellung den Kaffeegetränkebypasskanal von dem Kaffeegetränkeauslauf absperrt und in einer zweiten Ventilstellung mit dem Kaffeegetränkeauslauf verbindet, stellt somit ein Absperrventil dar, zu dessen Funktion es im Wesentlichen nur auf dessen beide Endstellungen ankommt. Die strömungsmäßigen Verbindungen des ersten Druckventils mit dem Kaffeegetränkeauslauf und/oder der Brühkammer brauchen hingegen nicht verändert bzw. eingestellt zu werden, weil das erste Druckventil bzw. Cremaventil ohne Weiteres in der Art eines Sicherheitsventils nur öffnet, wenn der Brühkammerdruck einen ersten konstruktiv vorgegebenen Wert erreicht und überschreiten will, wobei dieser Wert nicht erreicht werden kann, wenn der Kaffeegetränkebypasskanal freigeschaltet ist.

Die vorstehende Kaffeeespressomaschine ist besonders vorteilhaft auf eine solche erweitert, mit der nicht nur Espresso und Morgenkaffee, sondern auch Schümlikaffee mit aufschwimmendem Schaum, der keine Crema ist, auf Wunsch des Benutzers bereitet werden kann.

Hierzu weist die Espressomaschine nach Anspruch 1 die Merkmale auf, dass in dem Brühkolben ein zweites federbelastetes Druckventil in der Kaffeegetränkkanalanordnung strömungstechnisch zwischen der Brühkammer und dem Kaffeegetränkeauslauf angeordnet ist, welches öffnet, wenn der Brühkammerdruck einen zweiten konstruktiv vorgegebenen Wert überschreitet, der niedriger als der erste vorgegebene Wert des ersten Druckventils ist, dass in dem Brühkolben ein zweiter verschiebbarer Ventilkolben von außerhalb der Brühkammer einstellbar ist und dass der zweite Ventilkolben so ausgebildet und einerseits mit dem zweiten Druckventil sowie andererseits mit dem Kaffeegetränkeauslauf strömungstechnisch verbunden ist, dass er in einer ersten Ventilstellung das zweite Druckventil von dem Kaffeegetränkeauslauf trennt und in einer zweiten Ventilstellung mit dem Kaffeegetränkeauslauf verbindet.

In dieser Espressokaffeemaschine dient das erste Druckventil zur Espressoerzeugung mit Crema unter einem verhältnismäßig hohen Überdruck von wenigstens ca. 5 bar und wahlweise das zweite federbelastete Druckventil dient zur Schümlikaffeebereitung unter einem demgegenüber geringeren Überdruck. Das erste federbelastete Druckventil kann somit auch als Hochdruckventil angesehen werden und das zweite federbelastete Druckventil als Niederdruckventil. Der zweite, in dem Brühkolben angeordnete verschiebbare Ventilkolben eines Kolbenventils, der außerhalb der Brühkammer eingestellt werden kann, aktiviert in seiner zweiten Ventilstellung das zweite Druckventil zur Schümlikaffeebereitung. Hingegen ist das zweite federbelastete Druckventil in der ersten Ventilstellung des zweiten Ventilkolbens für die Kaffeegetränkebereitung unwirksam, weil es von dem Kaffeegetränkeauslauf abgesperrt ist. Im letzteren Fall wirkt nur das erste federbelastete Druckventil zur Espressoerzeugung mit Cremabildung. Wenn hingegen der Kaffeegetränkebypasskanal mit dem Kaffeegetränkeauslauf verbunden ist, so sind hier sowohl das erste federbelastete Druckventil als auch das zweite federbelastete Druckventil für die Kaffeegetränkebereitung unwirksam, da der zu ihrer Öffnung erforderliche Überdruck in der Brühkammer nicht erreicht wird.

Hierfür kann der Kaffeegetränkebypasskanal vorteilhaft in der Ausbildung der Espressokaffeemaschine nach Anspruch 2 zu dem Kaffeegetränkeauslass durchgeschaltet werden.

Die Espressokaffeemaschine weist nach Anspruch 2 die Merkmale auf, dass der Kaffeegetränkebypasskanal in dem Brühkolben über einen Ventilkolbenkanal in dem ersten Ventilkolben in der zweiten Ventilstellung, über einen Verbindungskanal sowie über einen Ventilkolbenkanal in dem zweiten Ventilkolben, in dessen zweiter Ventilstellung mit dem Kaffeegetränkeauslaufkanal verbunden ist, mit dem auch ein Ausgang des ersten Druckventils verbunden ist, dass ein Ausgang des zweiten Druckventils mit dem Verbindungskanal verbunden ist, dass Einstellmittel des ersten Ventilkolbens und des zweiten Ventilkolbens so ausgebildet sind, dass die erste Ventilstellung des ersten Ventilkolbens mit der ersten oder zweiten Ventilstellung des zweiten Ventilkolbens kombinierbar ist und die zweite Ventilstellung des ersten Ventilkolbens mit der zweiten Ventilstellung des zweiten Ventilkolbens gekoppelt ist. In dieser Anordnung kann der Verbindungskanal zumindest abschnittsweise Schümlikaffee aus dem zweiten federbelasteten Druckventil zu dem Kaffeegetränkeauslaufkanal führen, weil der zweite Ventilkolben durchlässig ist, oder den Kaffeegetränkebypasskanal mit dem Kaffeegetränkeauslaufkanal verbinden, weil auch der zweite Ventilkolben durchlässig ist.

Bei der letzteren Ausführungsform der Espressokaffeemaschine bzw. deren Brüheinheit können in dem Brühkolben in fertigungsgünstiger Weise nach Anspruch 3 der Verbindungskanal und zumindest diesem benachbarte Abschnitte des Kaffeegetränkebypasskanals sowie des Kaffeegetränkeauslaufkanals fluchtend angeordnet sein, so dass für diese nur eine einzige Bohrung erforderlich ist, in die Querbohrungen als Auslaufkanäle des ersten Druckventil und des zweiten Druckventils sowie ein Abschnitt des Kaffeegetränkebypasskanals münden können.

Nach Anspruch 4 ist bzw. sind der oder die Ventilkolben in dem Brühkolben der Brüheinheit über je einen Ventilkolbenstößel und einer an einer Stirnseite des Ventilkolbenstößels oder den Stirnseiten der Ventilkolbenstößel verschiebbaren Vorwahlkulisse einstellbar. Die beiden Ventilkolbenstößel können somit entsprechend der Gestaltung der Vorwahlkulisse im Verschiebebereich gegenüber den Stirnseiten der Ventilkolbenstößel diese in zueinander unterschiedliche Stellungen oder eine zueinander gleiche Stellung einstellen.

Nach Anspruch 5 können der oder die Ventilkolben über die Vorwahlkulisse einfach, aber zuverlässig manuell eingestellt werden.

Statt dessen kann oder können nach Anspruch 6 der oder die Ventilkolben mit je einem Elektromagneten einzeln eingestellt werden. Hierzu können die Einstellungen vorprogrammiert sein.

Eine weitere Einstellmöglichkeit des oder der Ventilkolben nach Anspruch 7 sieht einen programmabhängig gesteuerten Elektromotor mit einem Getriebe vor, welches mit dem oder den Ventilkolben gekoppelt ist.

In der Espressokaffeemaschine kann das erste Druckventil und gegebenenfalls das zweite Druckventil nach Anspruch 8 als federbelastetes Kugelventil ausgebildet sein.

Eine besonders kompakte Brüheinheit der Espressokaffeemaschine beinhaltet die Merkmale gemäß einem der Ansprüche 1-7.

Die Erfindung wird im Folgenden anhand einer Zeichnung mit vier Figuren beschrieben, aus denen sich weitere Einzelheiten ergeben. Es zeigen:
- Fig. 1: eine bevorzugte Ausführungsform einer Brüheinheit, welche die Zubereitung eines Espresso mit Cremabildung oder eines Schümlikaffees mit aufschwimmendem Schaum oder eines schaum- und cremafreien Kaffees gestattet, geschnitten in einer drucklosen Ausgangsstellung,
- Fig. 2: die Brüheinheit gemäß Fig. 1 in einer Stellung zur Zubereitung eines Espresso mit Cremabildung,
- Fig. 3: die Brüheinheit gemäß Fig. 1 in einer Stellung zur Bereitung von Schümlikaffee mit aufschwimmendem Schaum,
- Fig. 4: die Brüheinheit gemäß Fig. 1 in einer Stellung zur Zubereitung eines schaum- und cremafreien Kaffees bzw. Morgenkaffees.

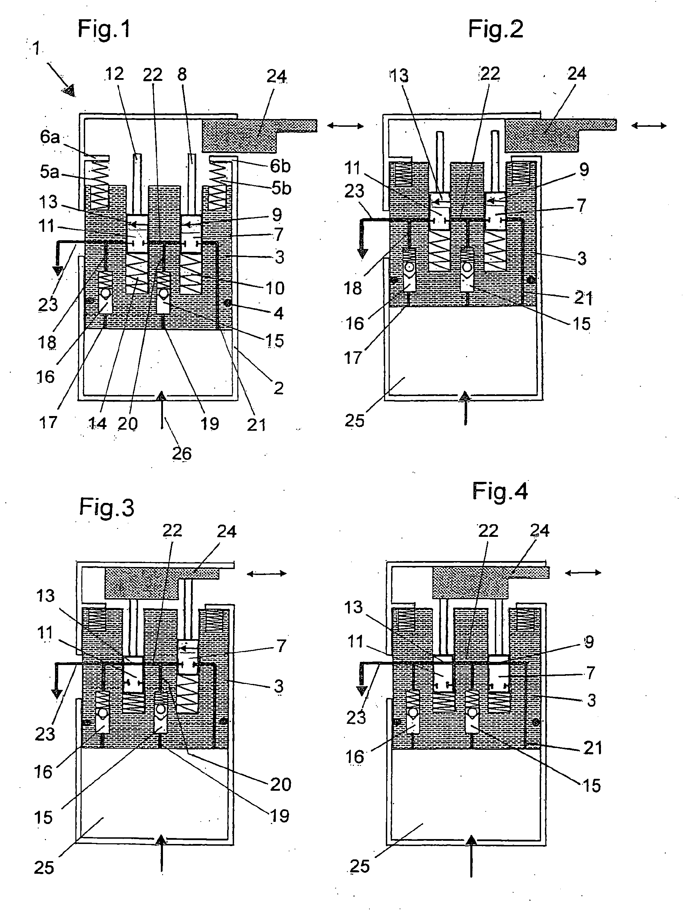

Die Brüheinheit 1 gemäß den Fig. 1-4 umfasst in einem Brühkammergehäuse 2 eine Brühkammer 25 mit einem in ihr verschiebbaren Brühkolben 3. Eine Verschiebung des Brühkolbens 3 kann durch Zusammenfahren der Brüheinheit nach Aufnahme von Kaffeepulver sowie durch Einwirkung des Brühwasserdrucks in der Brühkammer 2 entgegen der Druckkraft von Rückstellfedern 5a und 5b erfolgen, die sich an jeweils einer Rückstellfederauflage 6a bzw. 6b des Brühkammergehäuses 2 abstützen, wie am besten in Fig. 1 für die drucklose Ausgangsstellung sichtbar.

In dem Brühkolben 3 sind ein erster Ventilkolben 7 und ein zweiter Ventilkolben 11 verschiebbar angeordnet, die mittels jeweils einer Rückstellfeder 10, 14 in ihrer Ausgangsstellung gehalten werden, siehe Fig. 1 und 2. Entgegen der Kraft der Federn 14, 15 können die Ventilkolben 7, 11 mittels je eines Ventilkolbenstößels 8 bzw. 12 nach Maßgabe einer Vorwahlkulisse 24 verschoben werden. Die Vorwahlkulisse 24 kann von Hand oder programmiert elektromagnetisch oder elektromotorisch mit Getriebe positioniert, d.h. in Richtung des nicht bezeichneten Doppelpfeils, verschoben werden.

In den Ventilkolben 7, 11 sind Ventilkolbenkanäle bzw. Fließkanäle 9, 13 angeordnet, die je nach Position der Ventilkolben 7, 11 einen Durchfluss für an die Ventilkolben angeschlossene Kanäle freigeben bzw. jeweils einen Eingang des mit dem Ventilkolben 7 bzw. 11 versehenen Kolbenventils mit dessen Ausgang verbinden. Insbesondere ist mit einem Eingang zu dem ersten Ventilkolben 7 ein Kaffeegetränkebypasskanal 21 verbunden, der überdrucklos geschaltet werden kann, wenn er über die Ventilkolben 7 und 11 mit einem Kaffeegetränkeauslaufkanal 23 verbunden ist, welcher in die äußere Atmosphäre führt. Ein Verbindungskanal 22 verbindet einen Ausgang von dem ersten Ventilkolben 7 zu einem Eingang zu dem zweiten Ventilkolben 11, dessen Ausgang mit dem Kaffeegetränkeauslaufkanal 23 verbunden ist. Wie aus den Figuren 1 bis 4 ersichtlich, sind der Verbindungskanal 22 und zu diesem benachbarte Abschnitte des Kaffeegetränkebypasskanals 21 und des Kaffeegetränkeauslaufkanals 23 in dem Brühkolben 3 fluchtend angeordnet.

In dem Brühkolben 3 sind weiterhin die als Kugelventile ausgebildeten federbelasteten Druckventile 15, 16 in der Art von Überdruckventilen zu der Brühkammer 25 angeordnet. Hierzu verbindet jeweils ein Einlaufkanal 17 bzw. 19 die Brühkammer 25 mit den Druckventilen 16 bzw. dem Druckventil 15. Ein Auslaufkanal 18 verbindet einen Ausgang des Druckventils 16 mit dem Kaffeegetränkeauslaufkanal 23. Hingegen verbindet ein Auslaufkanal 20 das Druckventil 15 mit dem Verbindungskanal 22.

Die nicht bezeichnete Feder des Druckventils 16 öffnet dieses bei einem relativ hohen Flüssigkeitsdruck in der Brühkammer 25 entsprechend einem Cremaventil und wird in dieser Anmeldung auch als erstes Druckventil bezeichnet. Das erste Druckventil 16 öffnet bei einem so hohen Druck in der Brühkammer 25, dass bei dem Ausströmen des in der Brühkammer 25 bereiteten Espressocrema gebildet wird, wie weiter unten im Blick auf Fig. 3 gezeigt wird. Hingegen öffnet eine Feder in dem Druckventil 15 bereits bei einem niedrigeren Druck in der Brühkammer 25 zur Zubereitung von Schümlikaffee mit aufschwimmendem Schaum.

In Figur 1 ist zunächst die Brüheinheit 1 mit der Brühkammer 25 in der Ausgangsstellung des Brühkolbens 3 und der Vorwahlkulisse 24 dargestellt, bei der in der Brühkammer 25 kein Überdruck herrscht. Die Vorwahlkulisse nimmt eine Stellung ein, in der das erste Druckventil 16 und das zweite Druckventil 15 nicht betätigt sind, d.h. geschlossen sind. Die Einlaufkanäle 17 und 19 der Druckventile 16 und 15 sind nicht mit dem Flüssigkeitsauslaufkanal 23 bzw. dem Verbindungskanal 22 verbunden.

In Fig. 2 ist die Brüheinheit mit unter Brühdruck stehender Brühkammer 25 dargestellt. Dementsprechend ist der Brühkolben 3 entgegen der Kraft der Rückstellfedern 5a, 5b nach oben hochgedrückt, was aber die Ventilkolben 7, 11 nicht verschiebt, da die Ventilkolbenstößel 8 und 9 von der Vorwahlkulisse 24 in deren Ausgangsstellung nicht abgesenkt werden.

Wenn der Brühdruck in der Brühkammer 25 hoch genug angestiegen ist, öffnet zunächst das zweite Druckventil 15, wodurch aber kein Kaffeegetränk in den Kaffeegetränkeauslaufkanal 23 gelangt, weil das Druckventil 15 durch den Ventilkolben 11 gegenüber dem Kaffeegetränkeauslasskanal 23 abgesperrt ist. Sodann öffnet bei weiter in der Brühkammer 25 ansteigendem Druck das erste Druckventil 16, wodurch der zubereitete Espresso in den Kaffeegetränkeauslaufkanal 23 strömt, aus dem der Espresso mit Cremabildung ausläuft.

In der Situation gemäß Fig. 3 herrscht in der Brühkammer 25 Überdruck, der mindestens so groß ist wie der Druck, bei dem das zweite Druckventil 15 öffnet. Durch Verschiebung der Vorwahlkulisse 24 ist diese so positioniert, dass der Ventilkolben 7 sich nach wie vor in seiner Ausgangsstellung befindet, jedoch der Ventilkolben 11 in geöffneter, aktiver Position abgenkt, so dass der Verbindungskanal 22 über den Ventilkolbenkanal 13 zu dem Kaffeegetränkeauslasskanal 23 durchgeschaltet ist. Demzufolge kann das in der Brühkammer 25 bereitete Kaffeegetränk durch das bereits bei relativ niedrigem Brühwasserdruck öffnende Druckventil 15 über dessen Auslaufkanal 20 und den Verbindungskanal 22 in den Kaffeegetränkeauslaufkanal 23 ablaufen, ohne dass das zweite Druckventil 16, welches ein relatives Hochdruckventil ist, öffnet. Es erfolgt eine Schümlikaffeezubereitung mit aufschwimmendem Schaum.

In der in Fig. 4 dargestellten Situation steht die Brühkammer 25 der Brüheinheit unter ausreichendem Brühwasserdruck zur Zubereitung eines Kaffeegetränks, nämlich Morgenkaffee. Hierzu ist die Vorwahlkulisse 24 so verschoben bzw. positioniert, dass beide Ventilkolben 7, 11 sich in aktiver abgenkter Position befinden, d.h. mit ihren Ventilkolbenkanälen 9 und 13 durchgeschaltet sind. Demzufolge steht die Brühkammer 25 über den Kaffeegetränkebypasskanal 21, den Ventilkolbenkanal 9, den Verbindungskanal 22 und dem Ventilkolbenkanal 13 mit dem Kaffeegetränkeauslaufkanal 23 in Verbindung, so dass der Druck in der Brühkammer niedrig ist. Der in der Brühkammer zubereitete Morgenkaffee kann über die genannten Kanäle praktisch drucklos ablaufen. Die beiden Druckventile 15, 16 bleiben geschlossen, da ein sie öffnender Druck in der Brühkammer nicht erreicht wird. Es wird Morgenkaffee ohne Crema und ohne Schaum bereitet.

### Bezugszahlenliste

- 1: Brüheinheit
- 2: Brühkammergehäuse
- 3: Brühkolben
- 4: Dichtung
- 5a: Rückstellfeder
- 5b: Rückstellfeder
- 6a: Rückstellfederauflage
- 6b: Rückstellfederauflage
- 7: Ventilkolben
- 8: Ventilkolbenstößel
- 9: Ventilkolbenkanal
- 10: Rückstellfeder
- 11: Ventilkolben
- 12: Ventilkolbenstößel
- 13: Ventilkolbenkanal
- 14: Rückstellfeder
- 15: zweites Druckventil (Niederdruck)
- 16: erstes Druckventil (Hochdruck)
- 17: Einlaufkanal
- 18: Auslaufkanal
- 19: Einlaufkanal
- 20: Auslaufkanal
- 21: Kaffeegetränkebypasskanal
- 22: Verbindungskanal
- 23: Kaffeegetränkeauslaufkanal
- 24: Vorwahlkulisse
- 25: Brühkammer
- 26: Brühwassereinlauf

## Patentansprüche

1. Espressokaffeemaschine mit einer Brüheinheit (1), die eine Brühkammer (25) und mindestens ein erstes federbelastetes Druckventil (16) umfasst, welches strömungstechnisch zwischen der Brühkammer (25) und einem Kaffeegetränkeauslauf angeordnet ist und welches öffnet, wenn der Brühkammerdruck einen ersten konstruktiv vorgegebenen Wert überschreitet,
wobei ein überdruckloser Kaffeegetränkebypasskanal (21) strömungsmäßig parallel zu mindestens dem ersten Druckventil (16) angeordnet ist und zwischen der Brühkammer (25) und dem Kaffeegetränkeauslauf (23) sperrbar ist,
wobei in der Brühkammer (25) der Brüheinheit (1) ein Brühkolben (3) verschiebbar angeordnet ist,
wobei der Kaffeegetränkebypasskanal (21) sowie mindestens das erste Druckventil (16) in dem Brühkolben (3) angeordnet sind,
wobei wenigstens ein erster in dem Brühkolben (3) verschiebbarer Ventilkolben (7) von außerhalb der Brühkammer (25) einstellbar ist und
wobei der erste Ventilkolben (7) so ausgebildet und einerseits mit dem Kaffeegetränkebypasskanal (21) sowie andererseits mit dem Kaffeegetränkeauslauf (23) strömungstechnisch so verbunden ist, dass er den Kaffeegetränkebypasskanal (21) in einer ersten Ventilstellung von dem Kaffeegetränkeauslauf (23) absperrt und in einer zweiten Ventilstellung mit dem Kaffeegetränkeauslauf (23) verbindet,
**dadurch gekennzeichnet,**
**dass** in dem Brühkolben (3) ein zweites federbelastetes Druckventil (15) strömungstechnisch zwischen der Brühkammer (25) und dem Kaffeegetränkeauslauf (23) angeordnet ist, welches öffnet, wenn der Brühkammerdruck einen zweiten konstruktiv vorgegebenen Wert überschreitet, der niedriger als der erste vorgegebene Wert des ersten Druckventils (16) ist,
**dass** in dem Brühkolben (3) ein zweiter verschiebbarer Ventilkolben (11) von außerhalb der Brühkammer (2) einstellbar ist und
**dass** der zweite Ventilkolben (11) so ausgebildet und einerseits mit dem zweiten Druckventil (15) sowie andererseits mit dem Kaffeegetränkeauslauf (23) strömungstechnisch so verbunden ist, dass er in einer ersten Ventilstellung das zweite Druckventil (15) gegen den Kaffeegetränkeauslauf (23) absperrt und in einer zweiten Ventilstellung mit dem Kaffeegetränkeauslauf (23) verbindet.

2. Espressokaffeemaschine nach Anspruch 1,
**dadurch gekennzeichnet,**
**dass** der Kaffeegetränkebypasskanal (21) in dem Brühkolben (3) über einen Ventilkolbenkanal (9) in dem ersten Ventilkolben (7) in der zweiten Ventilstellung, über einen Verbindungskanal (22) sowie über einen Ventilkolbenkanal (13) in dem zweiten Ventilkolben (11) in dessen zweiter Ventilstellung mit dem Kaffeegetränkeauslaufkanal verbunden ist, mit dem auch ein Ausgang des ersten Druckventils (16) verbunden ist, dass ein Ausgang des zweiten Druckventils (15) mit dem Verbindungskanal (22) verbunden ist, und
**dass** Einstellmittel (8, 12, 24) des ersten Ventilkolbens (7) und des zweiten Ventilkolbens (11) so ausgebildet sind, dass die erste Ventilstellung des ersten Ventilkolbens (7) mit der ersten oder der zweiten Ventilstellung des zweiten Ventilkolbens (11) kombinierbar ist und der zweiten Ventilstellung des ersten Ventilkolbens (7) die zweite Ventilstellung des zweiten Ventilkolbens (11) zugeordnet ist.

3. Espressokaffeemaschine nach Anspruch 2,
**dadurch gekennzeichnet,**
**dass** der Verbindungskanal (22) und zumindest diesem benachbarte Abschnitte des Kaffeegetränkebypasskanals (21) sowie des Kaffeegetränkeauslaufkanals (23) in dem Brühkolben (3) fluchtend angeordnet sind.

4. Espressokaffeemaschine nach einem der Ansprüche 1-3,
**dadurch gekennzeichnet,**
**dass** der oder die Ventilkolben (7, 11) in dem Brühkolben über je einen Ventilkolbenstößel (8, 12) und einer an einer Stirnseite des Ventilkolbenstößels (8, 12) verschiebbaren Vorwahlkulisse (24) als Einstellmittel einstellbar ist bzw. sind.

5. Espressokaffeemaschine nach Anspruch 4,
**dadurch gekennzeichnet,**
**dass** der oder die Ventilkolben (7, 11) über die Vorwahlkulisse (24) manuell einstellbar ist bzw. sind.

6. Espressokaffeemaschine nach einem der Ansprüche 1-4,
**dadurch gekennzeichnet,**
**dass** der oder die Ventilkolben (7, 11) mit je einem Elektromagneten einzeln einstellbar ist bzw. sind.

7. Espressokaffeemaschine nach einem der Ansprüche 1 - 4,
**dadurch gekennzeichnet,**
**dass** der oder die Ventilkolben (7, 11) mit einem Elektromotor und einem Getriebe einstellbar ist bzw. sind.

8. Espressokaffeemaschine nach einem der vorangehenden Ansprüche,
**dadurch gekennzeichnet,**
**dass** das erste Druckventil (16, 30) und gegebenenfalls das zweite Druckventil (15) als federbelastetes Kugelventil ausgebildet ist bzw. sind.

9. Brüheinheit (1) einer Espressokaffeemaschine, wobei die Brüheinheit (1) eine Brühkammer (25) und mindestens ein erstes federbelastetes Druckventil (16) umfasst, welches in der Brüheinheit (1) strömungstechnisch zwischen der Brühkammer (25) und einem Kaffeegetränkeauslauf der Brüheinheit (1) angeordnet ist und welches öffnet, wenn der Brühkammerdruck einen ersten konstruktiv vorgegebenen Wert überschreitet, wobei ein überdruckloser Kaffeegetränkebypasskanal (21) in der Brüheinheit (1) strömungsmäßig parallel zu mindestens dem ersten Druckventil (16) angeordnet ist und zwischen der Brühkammer (25) und dem Kaffeegetränkeauslauf (23) sperrbar ist,
wobei in der Brühkammer (25) der Brüheinheit (1) ein Brühkolben (3) verschiebbar angeordnet ist,
wobei der Kaffeegetränkebypasskanal (21) sowie mindestens das erste Druckventil (16) in dem Brühkolben (3) angeordnet sind,
wobei wenigstens ein erster in dem Brühkolben (3) verschiebbarer Ventilkolben (7) von außerhalb der Brühkammer (25) in der Brüheinheit (1) einstellbar ist und
wobei der erste Ventilkolben (7) so ausgebildet und einerseits mit dem Kaffeegetränkebypasskanal (21) sowie andererseits mit dem Kaffeegetränkeauslauf (23) strömungstechnisch so verbunden ist, dass er den Kaffeegetränkebypasskanal (21) in einer ersten Ventilstellung von dem Kaffeegetränkeauslauf (23) absperrt und in einer zweiten Ventilstellung mit dem Kaffeegetränkeauslauf (23) verbindet,
**dadurch gekennzeichnet,**
**dass** in dem Brühkolben (3) ein zweites federbelastetes Druckventil (15) strömungstechnisch zwischen der Brühkammer (25) und dem Kaffeegetränkeauslauf (23) angeordnet ist, welches öffnet, wenn der Brühkammerdruck einen zweiten konstruktiv vorgegebenen Wert überschreitet, der niedriger als der erste vorgegebene Wert des ersten Druckventils (16) ist,
**dass** in dem Brühkolben (3) ein zweiter verschiebbarer Ventilkolben (11) von außerhalb der Brühkammer (2) in der Brüheinheit (1) einstellbar ist und
**dass** der zweite Ventilkolben (11) so ausgebildet und einerseits mit dem zweiten Druckventil (15) sowie andererseits mit dem Kaffeegetränkeauslauf (23) strömungstechnisch so verbunden ist, dass er in einer ersten Ventilstellung das zweite Druckventil (15) gegen den Kaffeegetränkeauslauf (23) absperrt und in einer zweiten Ventilstellung mit dem Kaffeegetränkeauslauf (23) verbindet.

10. Brüheinheit nach Anspruch 9,
**dadurch gekennzeichnet,**
**dass** der Kaffeegetränkebypasskanal (21) in dem Brühkolben (3) über einen Ventilkolbenkanal (9) in dem ersten Ventilkolben (7) in der zweiten Ventilstellung, über einen Verbindungskanal (22) in der Brüheinheit (1) sowie über einen Ventilkolbenkanal (13) in dem zweiten Ventilkolben (11) in dessen zweiter Ventilstellung mit dem Kaffeegetränkeauslaufkanal (23) verbunden ist, mit dem auch ein Ausgang des ersten Druckventils (16) verbunden ist,
**dass** ein Ausgang des zweiten Druckventils (15) mit dem Verbindungskanal (22) verbunden ist, und
**dass** Einstellmittel (8, 12, 24) des ersten Ventilkolbens (7) und des zweiten Ventilkolbens (11) so ausgebildet sind, dass die erste Ventilstellung des ersten Ventilkolbens (7) mit der ersten oder der zweiten Ventilstellung des zweiten Ventilkolbens (11) kombinierbar ist und der zweiten Ventilstellung des ersten Ventilkolbens (7) die zweite Ventilstellung des zweiten Ventilkolbens (11) zugeordnet ist.

11. Brüheinheit nach Anspruch 10,
**dadurch gekennzeichnet,**
**dass** der Verbindungskanal (22) und zumindest diesem benachbarte Abschnitte des Kaffeegetränkebypasskanals (21) sowie des Kaffeegetränkeauslaufkanals (23) in dem Brühkolben (3) fluchtend angeordnet sind.

12. Brüheinheit nach einem der Ansprüche 9-11,
**dadurch gekennzeichnet,**
**dass** der oder die Ventilkolben (7, 11) in dem Brühkolben über je einen Ventilkolbenstößel (8, 12)in der Brüheinheit (1) und einer an einer Stirnseite des Ventilkolbenstößels (8, 12) verschiebbaren Vorwahlkulisse (24) in der Brüheinheit (1) als Einstellmittel einstellbar ist bzw. sind.

13. Brüheinheit nach Anspruch 12,
**dadurch gekennzeichnet,**
**dass** der oder die Ventilkolben (7, 11) über die Vorwahlkulisse (24) manuell einstellbar ist bzw. sind.

14. Brüheinheit nach einem der Ansprüche 9-12,
**dadurch gekennzeichnet,**
**dass** der oder die Ventilkolben (7, 11) mit je einem Elektromagneten in der Brüheinzeit (1) einzeln einstellbar ist bzw. sind.

15. Brüheinheit nach einem der Ansprüche 9-12,
**dadurch gekennzeichnet,**
**dass** der oder die Ventilkolben (7, 11) mit einem Elektromotor und einem Getriebe in der Brüheinheit (1) einstellbar ist bzw. sind.

## Claims

1. An espresso coffee machine comprising a brewing unit (1) which comprises a brewing chamber (25) and at least one first spring-loaded pressure valve (16) which is disposed in a fluidic manner between the brewing chamber (25) and a coffee beverage outlet and which opens when the brewing chamber pressure exceeds a first constructionally predetermined value,
wherein an unpressurized coffee beverage bypass channel (21) is disposed parallel, in terms of flow, to at least the first pressure valve (16) and can be shut off between the brewing chamber (25) and the coffee beverage outlet (23),
wherein a displaceable brewing piston (3) is disposed in the brewing chamber (25) of the brewing unit (1),
wherein the coffee beverage bypass channel (21) and at least the first pressure valve (16) are disposed in the brewing piston (3),
wherein at least a first valve piston (7) which is displaceable within the brewing piston (3) can be adjusted from outside of the brewing chamber (25) and wherein the first valve piston (7) is formed in such a manner and connected in a fluidic manner to the coffee beverage bypass channel (21) at one side and to the coffee beverage outlet (23) at the other side in such a manner that it shuts off the coffee beverage bypass channel (21) from the coffee beverage outlet (23) in a first valve position and connects it to the coffee beverage outlet (23) in a second valve position,
**characterized in that**
a second spring-loaded pressure valve (15) is disposed in the brewing piston (3) in a fluidic manner between the brewing chamber (25) and the coffee beverage outlet (23), said pressure valve (15) opening when the brewing chamber pressure exceeds a second constructionally predetermined value, which is lower than the first constructionally predetermined value of the first pressure valve (16),
**in that** a second displaceable valve piston (11) can be adjusted within the brewing piston (3) from outside of the brewing chamber (2), and
**in that** the second valve piston (11) is formed in such a manner and connected in a fluidic manner to the second pressure valve (15) at one side and to the coffee beverage outlet (23) on the other side in such a manner that it shuts off the second pressure valve (15) from the coffee beverage outlet (23) in a first valve position and connects it to the coffee beverage outlet (23) in a second valve position.

2. The espresso coffee machine according to claim 1,
**characterized in that**
the coffee beverage bypass channel (21) in the brewing piston (3) is connected to the coffee beverage outlet channel, to which an exit of the first pressure valve (16) is also connected, via a valve piston channel (9) in the first valve piston (7) in the second valve position, via a connecting channel (22), and via a valve piston channel (13) in the second valve piston (11) in its second valve position,
**in that** an exit of the second pressure valve (15) is connected to the connecting channel (22), and
**in that** adjusting means (8, 12, 24) of the first valve piston (7) and of the second valve piston (11) are formed in such a manner that the first valve position of the first valve piston (7) can be combined with the first or with the second valve position of the second valve piston (11) and that the second valve position of the second valve piston (11) is associated with the second valve position of the first valve piston (7).

3. The espresso coffee machine according to claim 2,
**characterized in that**
the connecting channel (22) and at least sections of the coffee beverage bypass channel (21) adjacent thereto and sections of the coffee beverage outlet channel (23) adjacent thereto are disposed in alignment within the brewing piston (3).

4. The espresso coffee machine according to any one of claims 1 to 3,
**characterized in that**
the valve piston(s) (7, 11) in the brewing piston can each be adjusted using a respective valve piston plunger (8, 12) and a pre-selection member (24) displaceable at a front side of the valve piston plunger (8, 12) as adjusting means.

5. The espresso coffee machine according to claim 4,
**characterized in that**
the valve piston(s) (7, 11) can be adjusted manually using the pre-selection member (24).

6. The espresso coffee machine according to any one of claims 1 to 4,
**characterized in that**
the valve piston(s) (7, 11) can each be adjusted individually using a respective electromagnet.

7. The espresso coffee machine according to any one of claims 1 to 4,
**characterized in that**
the valve piston(s) (7, 11) can be adjusted using an electric motor and a transmission.

8. The espresso coffee machine according to any one of the preceding claims,
**characterized in that**
the first pressure valve (16, 30) and, if applicable, the second pressure valve (15) are configured as spring-loaded ball valves.

9. A brewing unit (1) of an espresso coffee machine, the brewing unit (1) comprising a brewing chamber (25) and at least one first spring-loaded pressure valve (16) which is disposed in the brewing unit (1) in a fluidic manner between the brewing chamber (25) and a coffee beverage outlet of the brewing unit (1) and which opens when the brewing chamber pressure exceeds a first constructionally predetermined value,
wherein an unpressurized coffee beverage bypass channel (21) is disposed in the brewing unit (1) parallel, in terms of flow, to at least the first pressure valve (16) and can be shut off between the brewing chamber (25) and the coffee beverage outlet (23),
wherein a displaceable brewing piston (3) is disposed in the brewing chamber (25) of the brewing unit (1),
wherein the coffee beverage bypass channel (21) and at least the first pressure valve (16) are disposed in the brewing piston (3),
wherein at least a first valve piston (7) which is displaceable within the brewing piston (3) can be adjusted in the brewing unit (1) from outside of the brewing chamber (25) and
wherein the first valve piston (7) is formed in such a manner and connected in a fluidic manner to the coffee beverage bypass channel (21) at one side and to the coffee beverage outlet (23) at the other side in such a manner that it shuts off the coffee beverage bypass channel (21) from the coffee beverage outlet (23) in a first valve position and connects it to the coffee beverage outlet (23) in a second valve position,
**characterized in that**
a second spring-loaded pressure valve (15) is disposed in the brewing piston (3) in a fluidic manner between the brewing chamber (25) and the coffee beverage outlet (23), said pressure valve (15) opening when the brewing chamber pressure exceeds a second constructionally predetermined value, which is lower than the first constructionally predetermined value of the first pressure valve (16),
**in that** a second displaceable valve piston (11) can be adjusted within the brewing piston (3) in the brewing unit (1) from outside of the brewing chamber (2), and
**in that** the second valve piston (11) is formed in such a manner and connected in a fluidic manner to the second pressure valve (15) at one side and to the coffee beverage outlet (23) on the other side in such a manner that it shuts off the second pressure valve (15) from the coffee beverage outlet (23) in a first valve position and connects it to the coffee beverage outlet (23) in a second valve position.

10. The brewing unit according to claim 9,
**characterized in that**
the coffee beverage bypass channel (21) in the brewing piston (3) is connected to the coffee beverage outlet channel (23), to which an exit of the first pressure valve (16) is also connected, via a valve piston channel (9) in the first valve piston (7) in the second valve position, via a connecting channel (22) in the brewing unit (1), and via a valve piston channel (13) in the second valve piston (11) in its second valve position,
**in that** an exit of the second pressure valve (15) is connected to the connecting channel (22), and
**in that** adjusting means (8, 12, 24) of the first valve piston (7) and of the second valve piston (11) are formed in such a manner that the first valve position of the first valve piston (7) can be combined with the first or with the second valve position of the second valve piston (11) and that the second valve position of the second valve piston (11) is associated with the second valve position of the first valve piston (7).

11. The brewing unit according to claim 10,
**characterized in that**
the connecting channel (22) and at least sections of the coffee beverage bypass channel (21) adjacent thereto and sections of the coffee beverage outlet channel (23) adjacent thereto are disposed in alignment within the brewing piston (3).

12. The brewing unit according to any one of claims 9 to 11,
**characterized in that**
the valve piston(s) (7, 11) in the brewing piston can each be adjusted using a respective valve piston plunger (8, 12) in the brewing unit (1) and a pre-selection member (24) in the brewing unit (1) displaceable at a front side of the valve piston plunger (8, 12) as adjusting means.

13. The brewing unit according to claim 12,
**characterized in that**
the valve piston(s) (7, 11) can be adjusted manually using the pre-selection member (24).

14. The brewing unit according to any one of claims 9 to 12,
**characterized in that**
the valve piston(s) (7, 11) can each be adjusted individually in the brewing unit (1) using a respective electromagnet.

15. The brewing unit according to any one of claims 9 to 12,
**characterized in that**
the valve piston(s) (7, 11) can be adjusted in the brewing unit (1) using an electric motor and a transmission.

## Revendications

1. Machine à café expresso comprenant une unité de percolation (1) qui comprend une chambre de percolation (25) et au moins une première valve de pression (16) à ressort qui est disposée de manière fluidique entre la chambre de percolation (25) et une sortie de boisson au café et qui s'ouvre quand la pression dans la chambre de percolation dépasse une première valeur prédéterminée par la construction,
un conduit de dérivation de boisson au café (21) non-pressurisé étant disposé en parallèle, en termes de flux, au moins à l'une première valve de pression (16) et pouvant être fermé entre la chambre de percolation (25) et la sortie de boisson au café (23),
un piston de percolation (3) déplaçable étant disposé dans la chambre de percolation (25) de l'unité de percolation (1),
le conduit de dérivation de boisson au café (21) et au moins la première valve de pression (16) étant disposés dans le piston de percolation (3),
au moins un premier piston de valve (7) qui est déplaçable dans le piston de percolation (3) pouvant être ajusté de l'extérieur de la chambre de percolation (25) et
le premier piston de valve (7) étant formé de telle manière et relié de manière fluidique au conduit de dérivation de boisson au café (21) d'un côté et à la sortie de boisson au café (23) de l'autre côté de telle manière qu'il ferme le conduit de dérivation de boisson au café (21) par rapport à la sortie de boisson au café (23) dans une première position de valve et le relie à la sortie de boisson au café (23) dans une deuxième position de valve,
**caractérisée en ce qu'**
une deuxième valve de pression (15) à ressort est disposée dans le piston de percolation (3) de manière fluidique entre la chambre de percolation (25) et la sortie de boisson au café (23), ladite valve de pression (15) s'ouvrant quand la pression dans la chambre de percolation dépasse une deuxième valeur prédéterminée par la construction, qui est inférieure à la première valeur prédéterminée par la construction de la première valve de pression (16),
**en ce qu'**un deuxième piston de valve (11) déplaçable peut être ajusté dans le piston de percolation (3) de l'extérieur de la chambre de percolation (2), et
**en ce que** le deuxième piston de valve (11) est formé de telle manière et relié de manière fluidique à la deuxième valve de pression (15) d'un côté et à la sortie de boisson au café (23) de l'autre côté de telle manière qu'il ferme la deuxième valve de pression (15) par rapport à la sortie de boisson au café (23) dans une première position de valve et la relie à la sortie de boisson au café (23) dans la deuxième position de valve.

2. Machine à café expresso selon la revendication 1,
**caractérisée en ce que**
le conduit de dérivation de boisson au café (21) dans le piston de percolation (3) est relié au conduit de sortie de boisson au café, auquel une sortie de la première valve de pression (16) est aussi reliée, via un conduit de piston de valve (9) dans le premier piston de valve (7) dans la deuxième position de valve, via un conduit de liaison (22) et via un conduit de piston de valve (13) dans le deuxième piston de valve (11) dans sa deuxième position de valve,
**en ce qu'**une sortie de la deuxième valve de pression (15) est reliée au conduit de liaison (22), et
**en ce que** des moyens d'ajustement (8, 12, 24) du premier piston de valve (7) et du deuxième piston de valve (11) sont formés de telle manière que la première position de valve du premier piston de valve (7) peut être combinée ave la première ou la deuxième position de valve du deuxième piston de valve (11) et que la deuxième position de valve du deuxième piston de valve (11) est associée à la deuxième position de valve du premier piston de valve (7).

3. Machine à café expresso selon la revendication 2,
**caractérisée en ce que**
le conduit de liaison (22) et au moins des sections du conduit de dérivation de boisson au café (21) adjacentes a celui-ci et des sections du conduit de sortie de boisson au café (23) adjacentes à celui-ci sont disposés en alignement dans le piston de percolation (3).

4. Machine à café expresso selon l'une quelconque des revendications 1 à 3,
**caractérisée en ce que**
le(s) piston(s) de valve (7, 11) dans le piston de percolation peut/peuvent chacun être ajusté(s) à l'aide d'un poussoir de piston de valve (8, 12) respectif et d'un organe de pré-sélection (24) déplaçable sur une face frontale du poussoir de piston de valve (8, 12) comme moyens d'ajustement.

5. Machine à café expresso selon la revendication 4,
**caractérisée en ce que**
le(s) piston(s) de valve (7, 11) peut/peuvent être ajusté(s) manuellement à l'aide de l'organe de pré-sélection (24).

6. Machine à café expresso selon l'une quelconque des revendications 1 à 4,
**caractérisée en ce que**
le(s) piston(s) de valve (7, 11) peut/peuvent chacun être ajusté(s) individuellement à l'aide d'un électroaimant respectif.

7. Machine à café expresso selon l'une quelconque des revendications 1 à 4,
**caractérisée en ce que**
le(s) piston(s) de valve (7, 11) peut/peuvent chacun être ajusté(s) à l'aide d'un moteur électrique et d'une transmission.

8. Machine à café expresso selon l'une quelconque des revendications précédentes,
**caractérisée en ce que**
la première valve de pression (16, 30) et, le cas échéant, la deuxième valve de pression (15) sont configurées comme valves sphériques à ressort.

9. Unité de percolation (1) d'une machine à café expresso, l'unité de percolation (1) comprenant une chambre de percolation (25) et au moins une première valve de pression (16) à ressort qui est disposée dans l'unité de percolation (1) de manière fluidique entre la chambre de percolation (25) et une sortie de boisson au café de l'unité de percolation (1) et qui s'ouvre quand la pression dans la chambre de percolation dépasse une première valeur prédéterminée par la construction,
un conduit de dérivation de boisson au café (21) non-pressurisé étant disposé dans l'unité de percolation (1) en parallèle, en termes de flux, au moins à l'une première valve de pression (16) et pouvant être fermé entre la chambre de percolation (25) et la sortie de boisson au café (23),
un piston de percolation (3) déplaçable étant disposé dans la chambre de percolation (25) de l'unité de percolation (1),
le conduit de dérivation de boisson au café (21) et au moins la première valve de pression (16) étant disposés dans le piston de percolation (3),
au moins un premier piston de valve (7) qui est déplaçable dans le piston de percolation (3) pouvant être ajusté dans l'unité de percolation (1) de l'extérieur de la chambre de percolation (25) et
le premier piston de valve (7) étant formé de telle manière et relié de manière fluidique au conduit de dérivation de boisson au café (21) d'un côté et à la sortie de boisson au café (23) de l'autre côté de telle manière qu'il ferme le conduit de dérivation de boisson au café (21) par rapport à la sortie de boisson au café (23) dans une première position de valve et le relie à la sortie de boisson au café (23) dans une deuxième position de valve,
**caractérisée en ce qu'**
une deuxième valve de pression (15) à ressort est disposée dans le piston de percolation (3) de manière fluidique entre la chambre de percolation (25) et la sortie de boisson au café (23), ladite valve de pression (15) s'ouvrant quand la pression dans la chambre de percolation dépasse une deuxième valeur prédéterminée par la construction, qui est inférieure à la première valeur prédéterminée par la construction de la première valve de pression (16),
**en ce qu'**un deuxième piston de valve (11) déplaçable peut être ajusté dans le piston de percolation (3) dans l'unité de percolation (1) de l'extérieur de la chambre de percolation (2), et
**en ce que** le deuxième piston de valve (11) est formé de telle manière et relié de manière fluidique à la deuxième valve de pression (15) d'un côté et à la sortie de boisson au café (23) de l'autre côté de telle manière qu'il ferme la deuxième valve de pression (15) par rapport à la sortie de boisson au café (23) dans une première position de valve et la relie à la sortie de boisson au café (23) dans une deuxième position de valve.

10. Unité de percolation selon la revendication 9,
**caractérisée en ce que**
le conduit de dérivation de boisson au café (21) dans le piston de percolation (3) est relié au conduit de sortie de boisson au café (23), auquel une sortie de la première valve de pression (16) est aussi reliée, via un conduit de piston de valve (9) dans le premier piston de valve (7) dans la deuxième position de valve, via un conduit de liaison (22) dans l'unité de percolation (1) et via un conduit de piston de valve (13) dans le deuxième piston de valve (11) dans sa deuxième position de valve,
**en ce qu'**une sortie de la deuxième valve de pression (15) est reliée au conduit de liaison (22), et
**en ce que** des moyens d'ajustement (8, 12, 24) du premier piston de valve (7) et du deuxième piston de valve (11) sont formés de telle manière que la première position de valve du premier piston de valve (7) peut être combinée ave la première ou la deuxième position de valve du deuxième piston de valve (11) et que la deuxième position de valve du deuxième piston de valve (11) est associée à la deuxième position de valve du premier piston de valve (7).

11. Unité de percolation selon la revendication 10,
**caractérisée en ce que**
le conduit de liaison (22) et au moins des sections du conduit de dérivation de boisson au café (21) adjacentes a celui-ci et des sections du conduit de sortie de boisson au café (23) adjacentes à celui-ci sont disposés en alignement dans le piston de percolation (3).

12. Unité de percolation selon l'une quelconque des revendications 9 à 11,
**caractérisée en ce que**
le(s) piston(s) de valve (7, 11) dans le piston de percolation peut/peuvent chacun être ajusté(s) à l'aide d'un poussoir de piston de valve (8, 12) respectif dans l'unité de percolation (1) et d'un organe de pré-sélection (24) déplaçable sur une face frontale du poussoir de piston de valve (8, 12) comme moyens d'ajustement dans l'unité de percolation (1).

13. Unité de percolation selon la revendication 12,
**caractérisée en ce que**
le(s) piston(s) de valve (7, 11) peut/peuvent être ajusté(s) manuellement à l'aide de l'organe de pré-sélection (24).

14. Unité de percolation selon l'une quelconque des revendications 9 à 12,
**caractérisée en ce que**
le(s) piston(s) de valve (7, 11) peut/peuvent chacun être ajusté(s) individuellement à l'aide d'un électroaimant respectif dans l'unité de percolation (1).

15. Unité de percolation selon l'une quelconque des revendications 9 à 12,
**caractérisée en ce que**
le(s) piston(s) de valve (7, 11) peut/peuvent chacun être ajusté(s) à l'aide d'un moteur électrique et d'une transmission dans l'unité de percolation (1).
